# EUROPÄISCHE PATENTANMELDUNG

(11) **EP 4 835 330 A2**
(43) Veröffentlichungstag der Anmeldung: **04.11.2026**
(21) Anmeldenummer: 26197838.1
(22) Anmeldetag: 23.11.2023
(51) Int. Cl.: F16H 61/32

(54) **VERFAHREN ZUM SCHALTEN EINES ELEKTRISCH SCHALTBAREN GETRIEBES FÜR EIN FAHRZEUG, INSBESONDERE NUTZFAHRZEUG, COMPUTERPROGRAMM UND/ODER COMPUTERLESBARES MEDIUM, STEUERGERÄT, ELEKTRISCH SCHALTBARES GETRIEBE, ACHSANORDNUNG UND FAHRZEUG, INSBESONDERE NUTZFAHRZEUG**

(62) Dokumentnummer(n) der früheren Anmeldung(en) nach Art. 76 EPÜ: 23211652.5 / 4 560 166
(71) Anmelder: ZF CV Systems Global GmbH, 3006 Bern (CH)
(72) Erfinder: CALLESEN, Matthias, 30974 Wennigsen (DE); WINKELHOLZ, Uwe, 30974 Wennigsen (DE); JUNGMANN, Hans-Christian, 69517 Gorxheimertal (DE)
(74) Vertreter: Rabe, Dirk-Heinrich

(57) **Zusammenfassung**

Verfahren (100) zum Schalten eines elektrisch schaltbaren Getriebes (230) für ein Fahrzeug (200a), insbesondere Nutzfahrzeug (200b), wobei das Verfahren (100) aufweist: Erfassen (105) einer Position (P) eines Schaltelements (235) des Getriebes (230); Bestimmen (110) einer einen Schaltvorgang (300) betreffenden Mehrzahl von Bewegungsabschnitten (301a, 301b, 301c) anhand der Position (P); Bestimmen (120) eines Regelmodus (256a, 256b, 256c) anhand eines der aktuellen Position (P) entsprechenden Bewegungsabschnitts (301a, 301b, 301c); Bestimmen (125) eines Regelsignals (255) unter Anwendung des Regelmodus (256a, 256b, 256c); und Ausgeben (130) des Regelsignals (255) zum Regeln der Bewegung des Schaltelements (235) anhand des Regelmodus (256a, 256b, 256c).

## Beschreibung

Die Erfindung betrifft ein Verfahren zum Schalten eines elektrisch schaltbaren Getriebes für ein Fahrzeug, insbesondere Nutzfahrzeug. Die Erfindung betrifft auch ein Computerprogramm und/oder computerlesbares Medium, ein Steuergerät für ein Fahrzeug, insbesondere Nutzfahrzeug, mit einem elektrisch schaltbaren Getriebe, ein elektrisch schaltbares Getriebe mit einem Schaltelement, eine Achsanordnung für ein Fahrzeug, insbesondere Nutzfahrzeug, und ein Fahrzeug, insbesondere Nutzfahrzeug.

Um einen Schaltvorgang zu bewerkstelligen, wird ein Schaltelement des Getriebes durch einen Aktuator bewegt, um mit einem weiteren Schaltelement in Wirkverbindung gebracht zu werden und/oder um eine derartige Wirkverbindung zu lösen. Dabei sind verschiedene Aktuatoren bekannt.

Insbesondere bei pneumatisch schaltbaren Getrieben mit einer pneumatischen Aktuierung ist die auf das Schaltelement wirkende Kraft während der Bewegung des Aktuators kaum kontrollierbar. Aus vergleichsweise hohen Kräften können starke mechanische Beanspruchungen der Komponenten des Getriebes resultieren. Während der Bewegung kann ein Druckabfall auftreten, welcher eine reduzierte Kraft zur Folge haben kann. Daraus können hohe Schaltzeiten resultieren.

Elektrisch schaltbare Getriebe sind aus dem Stand der Technik bekannt. Dabei wird der Aktuator elektronisch geregelt kontrolliert, um die Bewegung des Schaltelements zu kontrollieren. Dabei wird eine Zielposition und/oder eine Bewegung eines elektrischen Schaltaktuators ähnlich zu der Zielposition eines pneumatischen Schaltaktuators eingestellt. Die Zielposition wird vorgegeben und der Schaltaktuator stellt ein Schaltelement des Getriebes gemäß der Anforderung unter Verwendung einer Kraft ein.

DE 694 02 779 T2 offenbart ein Verfahren zum Steuern einer auf einen Schaltmechanismus eines automatischen mechanischen Getriebes bei einem Schaltvorgang ausgeübten Kraft, wobei das Getriebe wenigstens eine Schaltstange aufweist, der Schaltmechanismus einen von einem Motor angetriebenen Schaltfinger enthält, der Schaltfinger mit der Schaltstange zusammenwirkt, um das Schalten des Getriebes zu bewirken, wobei das Verfahren beinhaltet, dass ein Motor mit einem impulsbreitenmodulierten Steuersignal mit variablem Lastzyklus erregt wird, um einen Zielstrom zu erzeugen, der an den Motor angelegt wird, und wobei der von dem Motor gezogene Strom erfasst wird, wobei ständiges Nachregulieren des Lastzyklus des Steuersignales bei einem Schaltvorgang als eine Funktion der Fehlersumme zwischen dem erfassten Strom und dem Zielstrom zuzüglich der Änderungsgeschwindigkeit des Fehlers, um den Fehler auf Null zu vermindern. Der Motor ist an eine Gleichspannungsquelle, wie bspw. die Fahrzeugbatterie, angeschlossen.

Eine Steuerelektronik führt dabei alle relevanten Rechenoperationen aus und stellt die Kommunikation zu anderen Elektroniken des Fahrzeugs sicher. Diese Steuerelektronik kontrolliert nach dem beschriebenen Verfahren den Motor und wandelt die Gleichspannung, bspw. aus der Fahrzeugbatterie, in geeignete Phasenströme des Motors.

Zum Kontrollieren des Aktuators und somit letztlich des Getriebes können vorbestimmte Parametersätze verwendet werden. Die Parametersätze dienen zur Regelung der Bewegung durch den elektronisch regelbaren Aktuator anhand beispielsweise der Position des Schaltelements als Regelgröße. Die Parametersätze bilden jedoch nicht notwendigerweise ausreichend die Bewegung des Schaltelements an kritischen Positionen ab, beispielsweise an einer Zahn-zu-Zahn-Stellung, also der Position eines zufälligen Erstkontakts des Schaltelements mit einem mit dem Schaltelement in Wirkverbindung bringbaren weiteren Schaltelement, wodurch eine Einspurbewegung behindert und der Schaltvorgang verzögert werden kann.

Insbesondere gegenüber pneumatisch schaltbaren Getrieben und gegenüber nur positionsgeregelten elektrisch schaltbaren Getrieben kann die Schaltzeit beziehungsweise Schaltperformance weiter verbessert werden. Ferner können Blockierstellungen, wie eine Zahn-zu-Zahn-Stellung, bei einem pneumatisch schaltbaren Getriebe und/oder einem nur positionsgeregelten elektrisch schaltbaren Getriebe durch entstehende Kräfte beim Schalten zu hohen mechanischen Beanspruchungen führen. Dadurch ist das Getriebe typischerweise aufwendig und komplex auszulegen, um den Kräften standhalten zu können, und/oder es kann aufgrund der hohen Belastungen zu einer Reduktion der Lebensdauer der Getriebeelemente kommen.

Der Erfindung liegt die Aufgabe zugrunde, den Stand der Technik zu bereichern und ein verbessertes Verfahren zum Schalten eines elektrisch schaltbaren Getriebes bereitzustellen. Insbesondere kann die Erfindung die Aufgabe lösen, ein effektiveres Schalten eines elektrisch schaltbaren Getriebes zu ermöglichen, was zu einer Verbesserung der Schaltperformance, zu weniger Verschleiß und/oder einer gesteigerten Kosteneffektivität führen kann.

Die Aufgabe wird durch ein Verfahren nach Anspruch 1 sowie den Gegenständen nach den weiteren unabhängigen Ansprüchen gelöst. Die Unteransprüche geben optionale Ausführungsformen der Erfindung an.

Gemäß der Erfindung wird ein Verfahren zum Schalten eines elektrisch schaltbaren Getriebes für ein Fahrzeug, insbesondere Nutzfahrzeug, bereitgestellt. Dabei weist das Verfahren auf: Erfassen einer Position eines Schaltelements des Getriebes; Bestimmen einer einen Schaltvorgang betreffenden Mehrzahl von Bewegungsabschnitten anhand der Position; Bestimmen eines Regelmodus anhand eines der aktuellen Position entsprechenden Bewegungsabschnitts; Bestimmen eines Regelsignals unter Anwendung des Regelmodus; und Ausgeben des Regelsignals zum Regeln der Bewegung des Schaltelements anhand des Regelmodus.

Durch das Erfassen der Position des Schaltelements kann die Kontrolle des Schaltelements direkt von der Position des Schaltelements während des Schaltprozesses abhängig gemacht werden. Dabei wurde erkannt, dass die Kontrolle eines elektrisch schaltbaren Getriebes verbessert werden kann, indem anhand der Position des Schaltelements die Bewegung des Schaltelements segmentiert wird, also in verschiedene Bewegungsabschnitte eingeteilt wird. Bei einer derartigen Bewegung kann sich das Schaltelement beispielsweise von einer Neutralstellung zu einer Endposition bewegen, bei der das Schaltelement mit einem weiteren Schaltelement vollständig im Eingriff ist. Ein Bewegungsabschnitt kann dabei als ein Teil der Bewegung und/oder als ein Teil der bei der Bewegung erreichten Positionen definiert werden. Die Bewegungsabschnitte und die Position können dann verwendet werden, um gemäß der aktuellen Position des Schaltelements den Bewegungsabschnitt zu bestimmen, in dem sich das Schaltelement aktuell angeordnet ist, also den aktuellen Bewegungsabschnitt. Der aktuelle Bewegungsabschnitt kann dann verwendet werden, um den Regelmodus zum Regeln und darauf basierend das Regelsignal zum Kontrollieren der Bewegung des Schaltelements durch den Aktuator zu bestimmen. Dabei kann die Regelung in verschiedenen Bewegungsabschnitten mit verschiedenen Regelmodi erfolgen. Der Regelmodus definiert dabei die Art des Regelns der Bewegung des Schaltelements, beispielsweise kann ein Regelmodus durch eine Festlegung einer Regelgröße und/oder von Parametern zum Regeln der Bewegung des Schaltelements definiert sein. Mit anderen Worten können für voneinander verschiedene Bewegungsabschnitte voneinander verschiedene Regelmodi definiert werden, um die Bewegung in den Bewegungsabschnitten differenziert regeln zu können. Damit kann das Regelsignal für jeden der Bewegungsabschnitte einen Regelmodus umfassen, um in dem jeweiligen Bewegungsabschnitte eine jeweils vorteilhafte Regelung des Schaltelements zu erzielen. Das Regelsignal kann das von einem Steuergerät ausgegebene Signal sein, mit dem ein Aktuator zum Regeln der Bewegung des Schaltelements beaufschlagt wird, und beispielsweise eine durch Pulsweitenmodulierung erzeugte Abfolge von elektrischen Strömen umfassen.

Damit kann das Potenzial eines elektrisch schaltbaren Getriebes weiter ausgenutzt werden. Durch das differenzierte Regeln der Bewegung des Schaltelements kann die Performance verbessert und die Schaltzeit verringert werden. Ferner ist es möglich, übermäßig hohe Kräfte durch eine gezielte Regelung zu vermeiden, was die Lebensdauer des Getriebes erhöhen kann und aufgrund einer zielgerichteteren Auslegung und Konstruktion eine kosteneffektivere Bereitstellung des Getriebes ermöglicht.

Optional definieren voneinander verschiedene Regelmodi voneinander verschiedene Regelgrößen. Damit ist es möglich, für einen Schaltvorgang, also eine Bewegung des Schaltelements, verschiedene Regelgrößen zu definieren. Beispielsweise kann in einem ersten Bewegungsabschnitt ein erster Regelmodus mit einer ersten Regelgröße definiert sein und in einem zweiten Bewegungsabschnitt kann ein zweiter Regelmodus mit einer von der ersten Regelgröße verschiedenen zweiten Regelgröße definiert sein. Die Regelgröße ist die durch Regelung konstant oder gezielt veränderlich zu haltende Größe. Dabei können die erste Regelgröße und/oder die zweite Regelgröße jeweils beispielsweise die Position des Schaltelements, die Geschwindigkeit des Schaltelements oder die Kraft des Schaltelements sein.

Optional sieht ein erster Regelmodus eine Kraft als Regelgröße vor und ein zweiter Regelmodus sieht die Position als Regelgröße vor. Dabei sieht der erste Regelmodus eine Kraftregelung vor und der zweite Regelmodus sieht eine Positionsregelung vor. Mit anderen Worten erfolgt die Bewegung des Schaltelements in dem ersten Bewegungsabschnitte durch den ersten Regelmodus kraftgeregelt und in dem zweiten Bewegungsabschnitte durch den zweiten Regelmodus positionsgeregelt. Beispielsweise kann eine Regelung des Schaltelements in einem ersten Bewegungsabschnitt vor einer Zahn-zu-Zahn-Stellung anhand der Position durchgeführt werden und in einem die Zahn-zu-Zahn-Stellung umfassenden zweiten Bewegungsabschnitt anhand der Kraft.

Optional ist die Bewegung des Schaltelements in mehr als zwei Bewegungsabschnitte eingeteilt und die Regelung in den mehr als zwei Bewegungsabschnitte erfolgt durch mehr als zwei voneinander verschiedene Regelmodi. Dabei kann die Regelgröße in zwei nicht benachbarten Bewegungsabschnitten dieselbe sein. Durch das Definieren der verschiedenen Regelgrößen kann in dem jeweiligen Bewegungsabschnitt eine möglichst geeignete Regelung erzielt werden.

Optional wird der Regelmodus derart bestimmt, dass sich voneinander verschiedene Regelmodi durch voneinander verschiedene Parameter unterscheiden. Damit ist es möglich, für einen Schaltvorgang verschiedene Parameter bzw. Parametersätze zu definieren. Beispielsweise kann in einem ersten Bewegungsabschnitte ein erster Regelmodus mit einem ersten Parameter und/oder ersten Parametersatz definiert sein und in einem zweiten Bewegungsabschnitt kann ein zweiter Regelmodus mit einem von dem ersten Parameter und/oder Parametersatz verschiedenen zweiten Parameter und/oder Parametersatz definiert sein. Erfolgt beispielsweise eine PID-Regelung kann als Parametersatz jeweils einen Proportionalitätsbeiwert, einen Integrationsbeiwert und/oder einen Differenzialbeiwert definieren. Zudem kann die Regelung jeweils durch einen für diesen Abschnitt gültigen Maximalstrom zum Beaufschlagen des elektrischen Aktuators mit elektrischer Energie beschränkt werden. Auch kann die Verfahrgeschwindigkeit des Aktuators durch eine in diesem Abschnitt zulässige Maximalgeschwindigkeit beschränkt werden. Der Parameter kann der Proportionalitätsbeiwert, der Integrationsbeiwert, der Differenzialbeiwert, der Maximalstrom und/oder die Maximalgeschwindigkeit sein. Ein Parametersatz ist eine Mehrzahl von Parametern. Der Parametersatz kann sich daher aus dem Proportionalitätsbeiwert, dem Integrationsbeiwert, dem Differenzialbeiwert, dem Maximalstrom und/oder der Maximalgeschwindigkeit zusammensetzen.

Optional weist das Verfahren auf: Erfassen eines Auswahlparameters, wobei das Bestimmen des Regelmodus von dem Auswahlparameter abhängig ist. Der Auswahlparameter kann somit als eine Größe und/oder Information definiert sein, die den Regelmodus definieren kann, insbesondere die Regelgröße und/oder einen oder mehrere Parameter. Damit ist es möglich, dass das Schalten von einem geeigneten Parameter abhängt, der das Betreiben des Fahrzeugs beziehungsweise eine Situation des Fahrzeugs repräsentieren kann. Der Auswahlparameter kann dabei die Regelgröße und/oder den Parameter bzw. Parametersatz des Regelmodus innerhalb eines oder mehrerer Bewegungsabschnitte beeinflussen. Damit können je nach Auswahlparameter differenzierte Schaltcharakteristika bereitgestellt werden, beispielsweise ein komfortables beziehungsweise leises und sanftes Schalten, ein schnelles Schalten und/oder ein Notfallschalten. Über die genannten beispielhaften Schaltcharakteristika hinaus sind weitere mögliche vordefinierte Parameter-/ und Regelprogramme möglich.

Optional hängt der Auswahlparameter von einer Fahrsituation, einer automatisierten Fahrfunktion und/oder einer Nutzereingabe ab. Damit kann die Regelung des Getriebes abhängig gemacht werden von potentiell für das Schalten relevanten Größen. Beispielsweise kann die Fahrsituation eine potentielle Gefahrensituation sein, womit das Getriebe hinsichtlich einer möglichst hohen Schaltperformance zu betreiben ist. Beispielsweise kann die Fahrfunktion und/oder die Nutzereingabe ein möglichst sanftes und/oder leises Betätigen des Getriebes anfordern, was insbesondere bei niedrigen Fahrzeug-Geschwindigkeiten im Stadtverkehr vorteilhaft ist. Der Auswahlparameter kann etwa in Abhängigkeit von der Fahrsituation den Regelmodus und damit direkt die Regelgröße und/oder Regelparameter beeinflussen.

Optional definiert der Auswahlparameter eine Regelgröße und/oder einen Parameter. Damit kann der Auswahlparameter beispielsweise bezogen auf die oben beschriebene Fahrsituation, Fahrfunktion und/oder Nutzereingabe eine entsprechende Regelgrößen und/oder einen Parameter bedingen beziehungsweise definieren und/oder einen Wertebereich der Regelgrößen und/oder des Parameters einschränken. Damit kann der Regelmodus von dem Auswahlparameter als einem geeigneten Parameter abhängen, der den Fahrzeugzustand repräsentiert.

Optional wird das Regelsignal unter Berücksichtigung einer Wechselroutine zum Wechseln zwischen voneinander verschiedenen Regelmodi bestimmt. Damit kann eine möglichst glatte Bewegung des Schaltelements sichergestellt werden. Dafür kann die Wechselroutine beispielsweise Randbedingungen umfassen, die die Bewegung des Schaltelements an einem Punkt zwischen zwei Bewegungsabschnitten definieren. Durch das Definieren der Randbedingungen kann somit die Bewegung bei einem Übergang zwischen den zwei Bewegungsabschnitten bestimmt werden. Eine Wechselroutine zwischen Regelmodi kann zwischen Bewegungsabschnitten und/oder durch den Auswahlparameter ausgelöst werden.

Optional wird das Regelsignal unter Berücksichtigung eines Vorsteuersignals bestimmt, wobei das Vorsteuersignal von der Position innerhalb eines der Bewegungsabschnitte und/oder einem dem Bewegungsabschnitt benachbarten Bewegungsabschnitt abhängt. Dabei kann der benachbarte Bewegungsabschnitt insbesondere ein gemäß der Bewegung des Schaltelements dem aktuellen Bewegungsabschnitt folgender beziehungsweise nächster Bewegungsabschnitt sein. Durch das Vorsteuersignal kann eine Feedforward-Kontrolle erzielt werden. Dafür kann das Vorsteuersignal anhand der Position und/oder dem benachbarten Bewegungsabschnitt und somit beispielsweise anhand einer für eine künftige Bewegung des Schaltelements notwendigen Kraft bestimmt werden. Die Kraft kann als Vorsteuergröße in das Regelsignal einfließen. Damit kann ein Positionsfehler beziehungsweise eine Abweichung zwischen einer einzuregelnden Soll-Position und einer Ist-Position vermindert werden, und die Kontrolle des Schaltelements kann so verbessert werden.

Gemäß einem weiteren Aspekt der Erfindung wird ein Computerprogramm und/oder computerlesbares Medium bereitgestellt. Das Computerprogramm und/oder computerlesbare Medium umfasst Befehle, die bei der Ausführung des Programms bzw. der Befehle durch einen Computer diesen veranlassen, das hier beschriebene Verfahren und/oder die Schritte des hier beschriebenen Verfahrens durchzuführen. Das Computerprogramm und/oder computerlesbare Medium kann Befehle umfassen, um als optional beschriebene Schritte des Verfahrens durchzuführen, um einen entsprechenden technischen Effekt zu erzielen.

Gemäß einem weiteren Aspekt der Erfindung wird ein Steuergerät für ein Fahrzeug, insbesondere Nutzfahrzeug, mit einem elektrisch schaltbaren Getriebe bereitgestellt. Das Steuergerät ist dazu eingerichtet, das oben beschriebene Verfahren durchzuführen. Das Steuergerät kann dazu eingerichtet sein, als optional beschriebene Schritte des Verfahrens durchzuführen, um einen entsprechenden technischen Effekt zu erzielen.

Gemäß einem weiteren Aspekt der Erfindung wird ein elektrisch schaltbares Getriebe bereitgestellt. Das elektrisch schaltbare Getriebe weist ein Schaltelement und das oben beschriebene Steuergerät auf. Optional ist das elektrisch schaltbare Getriebe ein automatisiertes Handschaltgetriebe (engl. "automatic manual transmission", AMT).

Gemäß einem Aspekt der Erfindung wird eine Achsanordnung für ein Fahrzeug, insbesondere Nutzfahrzeug, bereitgestellt. Dabei weist die Achsanordnung das oben beschriebene elektrisch schaltbare Getriebe auf. Die Achsanordnung und/oder das Steuergerät des elektrisch schaltbaren Getriebes kann dazu eingerichtet sein, als optional und/oder vorteilhaft beschriebene Schritte des Verfahrens durchzuführen, um einen entsprechenden technischen Effekt zu erzielen.

Gemäß einem weiteren Aspekt der Erfindung wird ein Fahrzeug, insbesondere Nutzfahrzeug, bereitgestellt. Das Fahrzeug weist ein elektrisch schaltbares Getriebe mit dem hier beschriebenen Steuergerät und/oder die oben beschriebene Achsanordnung auf. Das Fahrzeug und/oder das Steuergerät kann dazu eingerichtet sein, als optional und/oder vorteilhaft beschriebene Schritte des Verfahrens durchzuführen, um einen entsprechenden technischen Effekt zu erzielen.

Gemäß einer Ausführungsform offenbart die Erfindung ein Verfahren zum Schalten eines elektrisch schaltbaren Getriebes für ein Fahrzeug, insbesondere Nutzfahrzeug, wobei das Verfahren aufweist:
- Erfassen einer Position eines Schaltelements des Getriebes;
- Bestimmen einer einen Schaltvorgang betreffenden Mehrzahl von Bewegungsabschnitten anhand der Position;
- Bestimmen eines Regelmodus anhand eines der aktuellen Position entsprechenden Bewegungsabschnitts;
- Bestimmen eines Regelsignals unter Anwendung des Regelmodus; und
- Ausgeben des Regelsignals zum Regeln der Bewegung des Schaltelements anhand des Regelmodus.

Gemäß einer spezifischen Ausführungsform sind voneinander verschiedene Regelmodi voneinander verschiedene Regelgrößen definieren.

Gemäß einer weiteren Ausführungsform, ein erster Regelmodus eine Kraft als Regelgröße vorsieht und ein zweiter Regelmodus die Position als Regelgröße vorsieht.

Gemäß einem Aspekt wird der Regelmodus derart bestimmt, dass sich voneinander verschiedene Regelmodi durch voneinander verschiedene Parameter unterscheiden.

Gemäß einem weiteren Aspekt, das Verfahren zusätzlich aufweist:
- Erfassen eines Auswahlparameters, und wobei
- das Bestimmen des Regelmodus der von dem Auswahlparameter abhängig ist.

Außerdem hängt der Auswahlparameter gemäß einem Ausführungsbeispiel von einer Fahrsituation, einer automatisierten Fahrfunktion und/oder einer Nutzereingabe ab.

In einer weiteren Ausführungsform definiert der Auswahlparameter eine Regelgröße und/oder einen Parameter.

Gemäß einem Aspekt wird das Regelsignal unter Berücksichtigung einer Wechselroutine zum Wechseln zwischen voneinander verschiedenen Regelmodi bestimmt.

Gemäß einem Aspekt der Erfindung wird das Regelsignal unter Berücksichtigung eines Vorsteuersignals bestimmt, wobei das Vorsteuersignal von der Position innerhalb eines der Bewegungsabschnitte und/oder einem dem Bewegungsabschnitt benachbarten Bewegungsabschnitt abhängt.

In einer Ausführungsform ist ein Computerprogramm und/oder computerlesbares Medium offenbart, welches Befehle umfassen, die bei der Ausführung des Programms bzw. der Befehle durch einen Computer diesen veranlassen, das oben genannte Verfahren und/oder die Schritte des oben genannten Verfahrens gemäß wenigstens einem der Aspekten und/oder Ausführungsformen durchzuführen.

In einer anderen Ausführungsform ist ein Steuergerät für ein Fahrzeug, insbesondere Nutzfahrzeug, mit einem elektrisch schaltbaren Getriebe, offenbart, wobei das Steuergerät dazu eingerichtet ist, das Verfahren nach einem der Aspteten und/oder Ausführungsformen durchzuführen.

Gemäß einer weiteren Ausführungsform ist ein elektrisch schaltbares Getriebe mit einem Schaltelement und einem Steuergerät nach der oben genannten Ausführungsform offenbart.

Gemäß einer Weiterbildung ist Achsanordnung für ein Fahrzeug, insbesondere Nutzfahrzeug, offenbart, wobei die Achsanordnung ein elektrisch schaltbares Getriebe nach der oben genannten weiteren Ausführungsform aufweist.

Letztendlich ist ein Fahrzeug, insbesondere Nutzfahrzeug, mit einem elektrisch schaltbaren Getriebe nach der oben genannten weiteren Ausführungsform und/oder einer Achsanordnung nach der oben genannten Weiterbildung offenbart.

Weitere Vorteile und Merkmale der Erfindung sowie deren technische Effekte ergeben sich aus den Figuren und der Beschreibung der in den Figuren gezeigten bevorzugten Ausführungsformen. Dabei zeigen
Fig. 1 eine schematische Darstellung eines Fahrzeugs, insbesondere Nutzfahrzeugs, gemäß einer Ausführungsform der Erfindung;
Fig. 2 eine schematische Darstellung eines Schaltvorgangs eines Schaltelements eines elektrisch schaltbaren Getriebes und eines entsprechenden Regelsignals gemäß einer Ausführungsform der Erfindung; und
Fig. 3 eine schematische Darstellung eines Ablaufs eines Verfahrens gemäß einer Ausführungsform der Erfindung.

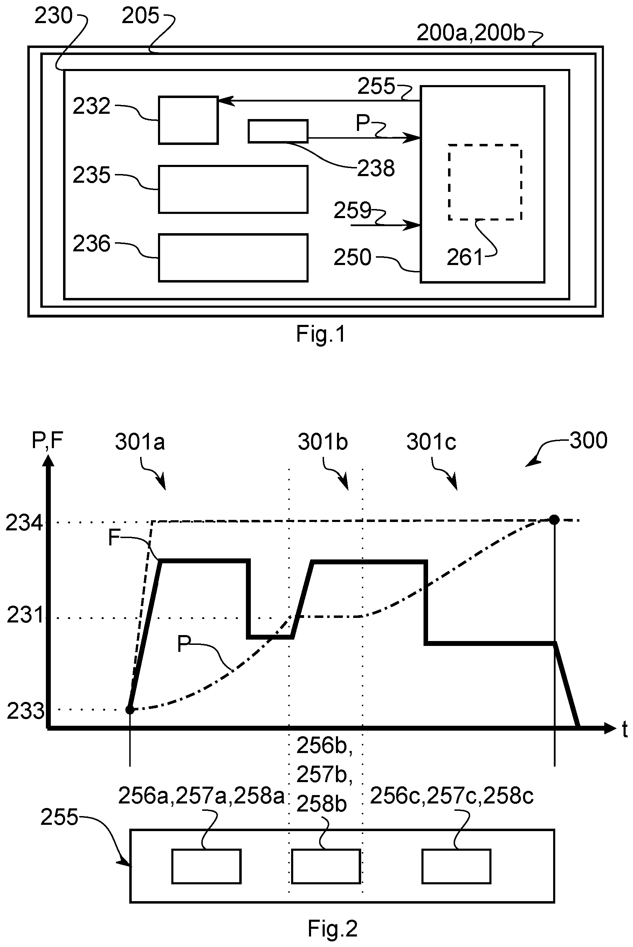

Figur 1 zeigt eine schematische Darstellung eines Fahrzeugs 200a, insbesondere Nutzfahrzeugs 200b, gemäß einer Ausführungsform der Erfindung. Das Fahrzeug 200a, insbesondere Nutzfahrzeug 200b, wird im Folgenden als Fahrzeug 200a, 200b bezeichnet. Das Fahrzeug 200a, 200b ist ein Landfahrzeug. Das Fahrzeug 200a, 200b ist beispielsweise ein Lastkraftwagen, ein Bus und/oder eine Zugmaschine eines mehrgliedrigen Fahrzeugs.

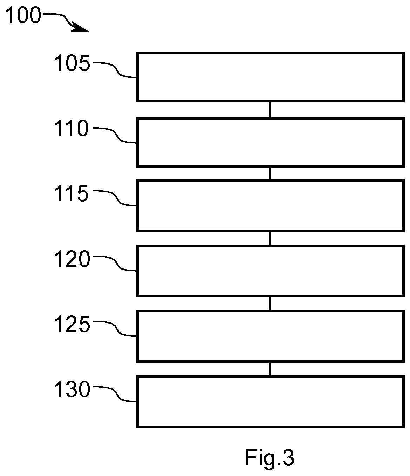

Das Fahrzeug 200a, 200b ist dazu eingerichtet, das mit Bezug zu Figur 3 beschriebene Verfahren 100 durchzuführen. Dafür umfasst das Fahrzeug 200a, 200b eine Achsanordnung 205 mit einem elektrisch schaltbaren Getriebe 230. Das elektrisch schaltbare Getriebe 230 weist ein Schaltelement 235 und ein weiteres Schaltelement 236 auf. Ein Schaltvorgang wird erzielt, indem beispielsweise das Schaltelement 235 aus einer Neutralstellung 233 mit dem weiteren Schaltelement 236 in einer Endposition 234 in Eingriff gebracht wird (siehe Figur 2). Dabei ändert sich ein Abstand zwischen dem Schaltelement 235 und dem weiteren Schaltelement 236. Eine den Abstand zwischen dem Schaltelement 235 und dem weiteren Schaltelement 236 beschreibende Größe wird im Folgenden als Position P bezeichnet. Das Schaltelement 235 vollzieht eine Bewegung, bei der sich die Position P ändert (siehe schematisch der obere Teil von Figur 2).

Um die Position P einzustellen und/oder zu regeln, umfasst das Getriebe 230 ein Steuergerät 250 und einen regelbaren elektrischen Schaltaktuator 232 zum Betätigen des Schaltelements 235. Der regelbare elektrische Schaltaktuator 232 umfasst beispielsweise einen elektronisch kommutierten Synchronmotor beziehungsweise einen bürstenlosen Gleichstrommotors als Stellmotor.

Das Steuergerät 250 ist dazu eingerichtet, das mit Bezug zu Figur 3 beschriebene Verfahren 100 durchzuführen, um ein Schalten des elektrisch schaltbaren Getriebes 230 durchzuführen.

Dafür weist das Getriebe 230 ein mit dem Steuergerät 250 verbundenen Positionssensor 237 auf. Der Positionssensor 237 ist dazu eingerichtet, die Position P des Schaltelements 235 zu erfassen. Das Steuergerät 250 ist dazu eingerichtet, die Position P von dem Positionssensor 237 zu empfangen. Anhand der Position P kann das Steuergerät 250 die Bewegung des Schaltelements 235 erfassen.

Das Steuergerät 250 ist dazu eingerichtet, den Schaltvorgang 300 zu segmentieren, also anhand der erfassen Position P in Bewegungsabschnitte 301a, 301b, 301c zu gliedern (siehe Figur 2). Dabei kann anhand der erfassten Position P und der Bewegungsabschnitte 301a, 301b, 301c ein aktueller Bewegungsabschnitt 301a, 301b, 301c bestimmt werden, also der Bewegungsabschnitt 301a, 301b, 301c, in den zu einer gegenwärtigen beziehungsweise aktuellen Zeit t die Position P fällt (siehe schematisch der obere Teil von Figur 2).

Das Steuergerät 250 ist dazu eingerichtet, einen Auswahlparameter 259 zu erfassen. Dabei kann der Auswahlparameter 259 von einer Fahrsituation 259a, einer automatisierten Fahrfunktion 259b und/oder einer Nutzereingabe 259c abhängen. Dafür kann das Fahrzeug 200a, 200b dazu eingerichtet sein, durch eine Umfeldsensorik die Fahrsituation 259a betreffende Informationen zu erfassen. Beispielsweise kann anhand von Bild- und/oder Abstandsdaten eine Gefahrensituation erkannt werden. Die automatisierte Fahrfunktion 259b kann beispielsweise einen automatisierten Schaltvorgang 300 betreffen, der durch eine Geschwindigkeitsregelung des Fahrzeugs 200a, 200b bedingt ist. Die Nutzereingabe 259c kann durch eine fahrzeugseitige Eingabevorrichtung (nicht gezeigt) erfasst werden. Damit das Steuergerät 250 den Auswahlparameter 259 erfassen kann, ist das Steuergerät 250 beispielsweise über einen Fahrzeugbus (nicht gezeigt) mit einem weiteren Steuergerät (nicht gezeigt) zum Ermitteln der Fahrsituation 259a, zum Durchführen der automatisierten Fahrfunktion 259b des Fahrzeugs 200a, 200b und/oder der Eingabevorrichtung kommunikationstechnisch verbunden.

Das Steuergerät 250 ist dazu eingerichtet, einen Regelmodus 256a, 256b, 256c anhand des der aktuellen Position P entsprechenden Bewegungsabschnitt 301a, 301b, 301c zu bestimmen. Das Steuergerät 250 ist ferner dazu eingerichtet, unter Anwendung des Regelmodus 256a, 256b, 256c ein Regelsignal 255 zum Regeln der Bewegung des Schaltelements 235 zu bestimmen.

Dabei wird der Regelmodus 256a, 256b, 256c derart bestimmt, dass sich voneinander verschiedene Bewegungsabschnitte 301a, 301b, 301c durch verschiedene Regelmodi 256a, 256b, 256c mit voneinander verschiedene Regelgrößen 257a, 257b, 257c und/oder mit voneinander verschiedenen Parametern 258a, 258b, 258c unterscheiden (siehe Figur 2). Der Regelmodus 256a, 256b, 256c ist dabei von dem Auswahlparameter 259 abhängig. Dabei kann das Steuergerät 250, das Regelsignal 255 unter Berücksichtigung eines Vorsteuersignal 261 bestimmen, wobei das Vorsteuersignal 261 von der Position P innerhalb eines der Bewegungsabschnitte 301a, 301b, 301c und/oder einem dem Bewegungsabschnitt 301a, 301b, 301c folgenden Bewegungsabschnitt 301a, 301b, 301c abhängt.

Wie in Figur 1 dargestellt, sind das Steuergerät 250 und der Schaltaktuator 232 miteinander kommunikationstechnisch verbunden, damit das Steuergerät 250 das das Regelsignal 255 an den Schaltaktuator 232 zum Bewegen des Schaltelements 235 übermitteln beziehungsweise ausgeben kann. Dabei wird das Regelsignal 255 unter Berücksichtigung einer Wechselroutine 260 zum Wechseln zwischen voneinander verschiedenen Regelmodi 256a, 256b, 256c bestimmt.

Ein Schaltvorgang 300 und ein derartiges Regelsignal 255 sind mit Bezug zu Figur 2 beschrieben.

Figur 2 zeigt eine schematische Darstellung eines Schaltvorgangs 300 zum Bewegen eines Schaltelements 235 eines elektrisch schaltbaren Getriebes 230 eines entsprechenden Regelsignals 255 gemäß einer Ausführungsform der Erfindung. Ein derartiges Getriebe 230 ist mit Bezug zu Figur 1 beschrieben. Figur 2 wird unter Bezugnahme auf Figur 1 und deren Beschreibung beschrieben.

Gemäß Figur 2 definiert der Schaltvorgang 300 (oberer Teil der Figur 2) einen Zusammenhang der Position P (punktgestrichene Linie) beziehungsweise einer Kraft F (durchgezogene Linie), mit der das Schaltelement 235 bewegt wird, jeweils in Abhängigkeit der Zeit t, jeweils in einer beliebigen Skala. Dabei ist die Zeit t als Ordinate (Wert auf x-Achse) aufgetragen und die Position P und die Kraft F sind als Abszisse (Wert auf y-Achse) aufgetragen. Dabei sind als Position P eine Neutralstellung 233, eine Blockierstellung 231 wie beispielsweise eine Zahn-zu-Zahn-Stellung, und eine Endposition 234 illustriert.

In einem Fall ohne ein Blockieren in der Blockierstellung 231 kann das Schaltelement 235 von der Neutralstellung 233 zu der Endposition 234 durch eine vergleichsweise schnelle Bewegung verbracht werden, siehe die die Positon P des Schaltelements 235 illustrierende gestrichene Linie.

Mit der punktgestrichenen Linie ist die Position P des Schaltelements 235 bei einer Bewegung dargestellt, bei der das Schaltelement 235 in die Blockierstellung 231 gerät. Dabei ist der Schaltvorgang 300 beziehungsweise die Bewegung des Schaltelements 230 in beispielsweise drei getrennte Bewegungsabschnitte 301a, 301b, 301c segmentiert, wie schematisch durch vertikale gepunktete Linien dargestellt.

Das unterhalb des Schaltvorgangs 300 nur schematisch dargestellte Regelsignal 255 ist gemäß den Bewegungsabschnitten 301a, 301b, 301c abschnittsweise definiert und illustriert die abschnittweise definierten Regelmodi 256a, 256b, 256c. Dabei ist für jeden der Bewegungsabschnitte 301a, 301b, 301c ein auf den jeweiligen Bewegungsabschnitt 301a, 301b, 301c abgestimmter Regelmodus 256a, 256b, 256c mit einer Regelgröße 257a, 257b, 257c und einem Parametersatz 258a, 258b, 258c definiert.

Die Bewegungsabschnitte 301a, 301b, 301c sind dabei charakteristisch für das Getriebe 230. Die Bewegungsabschnitte 301a, 301b, 301c und die entsprechenden Regelmodi können 256a, 256b, 256c demgemäß für jedes Getriebe 230 speziell anzupassen sein.

In dem in Figur 2 gezeigten Beispiel, wird von der Position P des Schaltelements 235 in Neutralstellung 233 als Anfangsposition ausgegangen. Die Position P wird erfasst. Damit steht fest, dass sich das Schaltelement 235 von der Neutralstellung 233 zu der Endposition 234 über die Blockierstellung 231 bewegt. Anhand der Position P in der Neutralstellung 233 wird der Schaltvorgang 300 in die drei Bewegungsabschnitte 301a, 301b, 301c geteilt. Ein erster Bewegungsabschnitt 301a umfasst die Bewegung des Schaltelements 235 von der Neutralstellung 233 und bevor das Schaltelement 235 die Blockierstellung 231 erreicht. Ein zweiter Bewegungsabschnitt 301b umfasst die Blockierstellung 231 und spiegelt so beispielsweise einen zufälligen Erstkontakt zwischen dem Schaltelement 235 und dem weiteren Schaltelement 236 sowie einen Beginn einer Einspurbewegung wider. Ein dritter Bewegungsabschnitt 301c umfasst die Bewegung des Schaltelements 235 nachdem das Schaltelement 235 die Blockierstellung 231 verlassen hat und spiegelt so ein Fangereignis wider.

In dem ersten Bewegungsabschnitt 301a erfolgt die Regelung der Bewegung des Schaltelements 235 in einem ersten Regelmodus 256a. Dabei erfolgt die Regelung anhand der Position P als erste Regelgröße 257a. Dafür wird ein erster Parameter 258a beziehungsweise Parametersatz vorgegeben, der die Positionsregelung definiert, beispielsweise einen Proportionalitätsbeiwert, einen Integrationsbeiwert, einen Differenzialbeiwert, ein Maximalstrom und/oder eine Maximalspannung.

Damit das Schaltelement 235 nicht mit zu hoher Geschwindigkeit auf das weitere Schaltelement 236 in der Blockierstellung 236 auftrifft, wird die Position P derart geregelt, dass die Kraft F in der Blockierstellung 236 reduziert ist. Damit kann ein sanftes Schalten und ein verminderter Verschleiß erzielt werden.

In dem zweiten Bewegungsabschnitt 301b erfolgt die Regelung der Bewegung des Schaltelements 235 in einem zweiten Regelmodus 256a. Dabei erfolgt die Regelung anhand der Kraft F als zweite Regelgröße 257b. Dafür wird ein zweiter Parameter 258b beziehungsweise Parametersatz vorgegeben, der die Kraftregelung definiert, beispielsweise einen Proportionalitätsbeiwert, einen Integrationsbeiwert, einen Differenzialbeiwert, ein Maximalstrom und/oder eine Maximalgeschwindigkeit.

In der Blockierstellung 231 ist eine Positionsregelung kaum denkbar. Daher wird in der Blockierstellung 231 die Kraft F geregelt und erhöht oder reduziert, bis die Blockierstellung 231 verlassen werden kann.

In dem dritten Bewegungsabschnitt 301c erfolgt die Regelung der Bewegung des Schaltelements 235 in einem dritten Regelmodus 256c. Dabei erfolgt die Regelung anhand der Position P als dritte Regelgröße 257c. Dafür wird ein dritter Parameter 258c beziehungsweise Parametersatz vorgegeben, der die Positionsregelung definiert, beispielsweise einen Proportionalitätsbeiwert, einen Integrationsbeiwert, einen Differenzialbeiwert, ein Maximalstrom und/oder eine Maximalgeschwindigkeit. Dabei kann der dritter Parametersatz 258c gleich zu oder verschieden von dem ersten Parametersatz 258a sein.

Figur 3 zeigt eine schematische Darstellung eines Ablaufs eines Verfahrens 100 gemäß einer Ausführungsform der Erfindung. Das Verfahren 100 ist ein Verfahren 100 zum Schalten eines elektrisch schaltbaren Getriebes 230 für ein Fahrzeug 200a, insbesondere Nutzfahrzeug 200b. Ein derartiges Fahrzeug 200a, 200b ist mit Bezug zu Figur 1 beschrieben. Ein Schaltvorgang 300 zum Schalten eines elektrisch schaltbaren Getriebes 230 ist mit Bezug zu Figur 2 beschrieben. Figur 3 wird unter Bezugnahme auf Figuren 1 und 2 beschrieben.

Das Verfahren 100 gemäß Figur 3 weist auf: Erfassen 105 einer Position P eines Schaltelements 235 des Getriebes 230.

Es erfolgt ein Bestimmen 110 einer einen Schaltvorgang 300 betreffenden Mehrzahl von Bewegungsabschnitten 301a, 301b, 301c anhand der Position P.

Das Verfahren 100 weist auf: Erfassen 115 eines Auswahlparameters 259. Der Auswahlparameter 259 hängt von einer Fahrsituation 259a, automatisierten Fahrfunktion 259b und/oder einer Nutzereingabe 259c ab. Der Auswahlparameter definiert 259 eine Regelgröße 257a, 257b, 257c und/oder einen Parameter 258a, 258b, 258c.

Es erfolgt ein Bestimmen 120 eines Regelmodus 256a, 256b, 256c anhand eines der aktuellen Position P entsprechenden Bewegungsabschnitts 301a, 301b, 301c. Dabei definieren voneinander verschiedene Regelmodi 256a, 256b, 256c voneinander verschiedene Regelgrößen 257a, 257b, 257c. Insbesondere sieht ein erster Regelmodus 256a eine Kraft als Regelgröße 257a, 257b, 257c vor und ein zweiter Regelmodus 256b sieht die Position P als Regelgröße 257a, 257b, 257c vor. Der Regelmodus 256a, 256b, 256c wird derart bestimmt, dass sich voneinander verschiedene Regelmodi 256a, 256b, 256c durch voneinander verschiedene Parameter 258a, 258b, 258c unterscheiden. Das Bestimmen 120 des Regelsignals 255 ist von dem Auswahlparameter 259 abhängig. Das Regelsignal 255 wird unter Berücksichtigung eines Vorsteuersignal 261 bestimmt, wobei das Vorsteuersignal 261 von der Position P innerhalb eines der Bewegungsabschnitte 301a, 301b, 301c und/oder einem dem Bewegungsabschnitt 301a, 301b, 301c benachbarten Bewegungsabschnitt 301a, 301b, 301c abhängt.

Es erfolgt ein Bestimmen 125 eines Regelsignals 255 unter Anwendung des Regelmodus 256a, 256b, 256c. Dabei wird das Regelsignal 255 durch eine pulsenweitenmodulierte Abfolge von elektrischen Strömen bestimmt. Das Regelsignal 255 wird dabei derart bestimmt, dass der Schaltaktuator 232 bei Beaufschlagung mit dem Regelsignal 255 die Bewegung des Schaltelements 235 gemäß dem Regelmodus 256a, 256b, 256c innerhalb des aktuellen Bewegungsabschnitts 301a, 301b, 301c regelt.

Es erfolgt ein Ausgeben 130 des Regelsignals 255 zum Bewegen des Schaltelements 235 anhand des Regelsignals 255. Das Regelsignal 255 wird unter Berücksichtigung einer Wechselroutine 260 zum Wechseln zwischen voneinander verschiedenen Regelmodi 256a, 256b, 256c bestimmt.

### Bezugszeichen (Teil der Beschreibung)

- 100: Verfahren
- 105: Erfassen einer Position
- 110: Bestimmen einer Mehrzahl von Bewegungsabschnitten
- 115: Erfassen eines Auswahlparameters
- 120: Bestimmen eines Regelmodus
- 125: Bestimmen eines Regelsignals
- 130: Ausgeben eines Regelsignals

- 200a: Fahrzeug
- 200b: Nutzfahrzeug
- 205: Achsanordnung
- 230: elektrisch schaltbares Getriebe
- 231: Blockierstellung
- 232: Schaltaktuator
- 233: Neutralstellung
- 234: Endposition
- 235: Schaltelement
- 236: weiteres Schaltelement
- 238: Positionssensor
- 250: Steuergerät
- 255: Regelsignal
- 256a, 256b, 256c: Regelmodi
- 257a, 257b, 257c: Regelgröße
- 258a, 258b, 258c: Parameter
- 259: Auswahlparameter
- 259a: Fahrsituation
- 259b: automatisierte Fahrfunktion
- 259c: Nutzereingabe
- 260: Wechselroutine
- 261: Vorsteuersignal
- 300: Schaltvorgang
- 301a, 301b, 301c: Bewegungsabschnitt
- P: Position
- t: Zeit

## Patentansprüche

1. Verfahren (100) zum Schalten eines elektrisch schaltbaren Getriebes (230) für ein Fahrzeug (200a), insbesondere Nutzfahrzeug (200b), wobei das Verfahren (100) aufweist:
- Erfassen (105) einer Position (P) eines Schaltelements (235) des elektrisch schaltbaren Getriebes (230), wobei das elektrisch schaltbare Getriebe (230) ein Steuergerät (250) und einen regelbaren elektrischen Schaltaktuator (232) zum Betätigen des Schaltelements (235) umfasst, so dass die Position (P) des Schaltelements (235) eingestellt und/oder eingeregelt werden kann;
- Bestimmen (110) einer einen Schaltvorgang (300) betreffenden Mehrzahl von Bewegungsabschnitten (301a, 301b, 301c) anhand der Position (P);
- Bestimmen (120) eines Regelmodus (256a, 256b, 256c) anhand eines der aktuellen Position (P) entsprechenden Bewegungsabschnitts (301a, 301b, 301c);
- Bestimmen (125) eines Regelsignals (255) unter Anwendung des Regelmodus (256a, 256b, 256c); und
- Ausgeben (130) des Regelsignals (255) zum Regeln der Bewegung des Schaltelements (235) anhand des Regelmodus (256a, 256b, 256c), wobei das Regelsignal (255) unter Berücksichtigung eines Vorsteuersignals (261) bestimmt wird, wobei das Vorsteuersignal (261) von der Position (P) innerhalb eines der Bewegungsabschnitte (301a, 301b, 301c) und/oder einem dem Bewegungsabschnitt (301a, 301b, 301c) benachbarten Bewegungsabschnitt (301a, 301b, 301c) abhängt.

2. Verfahren (100) nach Anspruch 1, wobei das Regelsignal (255) unter Berücksichtigung einer Wechselroutine (260) zum Wechseln zwischen voneinander verschiedenen Regelmodi (256a, 256b, 256c) bestimmt wird.

3. Computerprogramm und/oder computerlesbares Medium, umfassend Befehle, die bei der Ausführung des Programms bzw. der Befehle durch einen Computer diesen veranlassen, das Verfahren (100) und/oder die Schritte des Verfahrens (100) nach Anspruch 1 oder 2 durchzuführen.

4. Steuergerät (250) für ein Fahrzeug (200a), insbesondere Nutzfahrzeug (200b), mit einem elektrisch schaltbaren Getriebe (230), wobei das Steuergerät (250) dazu eingerichtet ist, das Verfahren (100) nach Anspruch 1 oder 2 durchzuführen.

5. Elektrisch schaltbares Getriebe (230) mit einem Schaltelement (235) und einem Steuergerät (250) nach Anspruch 4.

6. Fahrzeug (200a), insbesondere Nutzfahrzeug (200b), mit einem elektrisch schaltbaren Getriebe (230) nach Anspruch 5.
